# FASCICULE DE BREVET EUROPEEN

(11) **EP 1 578 626 B1**
(45) Date de publication et mention de la délivrance du brevet: **13.03.2013**
(21) Numéro de dépôt: 03789426.8
(22) Date de dépôt: 29.12.2003
(51) Int. Cl.: B60G 7/00, B60G 3/00, B62D 17/00

(54) **DISPOSITIF DE SUPPORT DE ROUE A TRIPLE CHARNIERE, DISPOSITIF DE SUSPENSION ET VEHICULE COMPRENANT LEDIT DISPOSITIF DE SUPPORT**
RADTRÄGERVORRICHTUNG MIT DREIFACHSCHARNIER, AUFHÄNGUNGSVORRICHTUNG UND KRAFTFAHRZEUG MIT EINER SOLCHEN TRÄGERVORRICHTUNG
WHEEL SUPPORT DEVICE WITH THREE PIVOTS, SUSPENSION DEVICE AND VEHICLE COMPRISING SAID SUPPORT DEVICE

(30) Priorité: 27.12.2002 FR 0216947
(43) Date de publication de la demande: 28.09.2005
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: DEAL, Michel, F-03110 Saint Rémy en Rollat (FR); VAXELAIRE, Alain, F-63540 Romagnat (FR)
(74) Mandataire: Lasson, Cédric Y. M.
(86) Numéro de dépôt international: PCT/EP2003/014937
(87) Numéro de publication internationale: WO 2004/058521

(56) Documents cités:
- EP-A- 1 275 534
- WO-A-00/16998
- WO-A-01/72572
- WO-A-02/058949
- FR-A- 937 309
- US-A- 5 346 241
- US-A- 5 451 073

## Description

La présente invention concerne la liaison au sol des véhicules, en particulier les dispositifs de suspension et de support de roue permettant un degré de liberté de carrossage de la roue par rapport aux éléments de suspension. Le terme "liaison au sol" recouvre tous les éléments et fonctions présents, actifs ou influant dans la relation entre la caisse du véhicule et le sol sur lequel celui-ci se déplace. Font donc partie de la liaison au sol notamment les éléments suivants: pneumatique, roue, roulement de roue, porte-roue, organes de freinage, éléments de suspension (bras, triangles, jambe de force, etc...), ressorts, amortisseurs, articulations, pièces anti-vibratoires, systèmes anti-roulis, anti-blocage, anti-patinage, système de direction, de contrôle de trajectoire.

La demande internationale WO 01/72572 décrit un dispositif de support de roue permettant un degré de liberté de carrossage de la roue par rapport aux éléments de suspension. Ce degré de liberté est contrôlé soit de manière active, par exemple par un vérin en fonctions de paramètres de roulage du véhicule, soit de manière passive par les efforts qui s'exercent sur la roue dans l'aire de contact.

La demande de brevet européen publiée sous le numéro EP 1247663 concerne également de tels dispositifs et propose d'utiliser, pour guider le mouvement de carrossage de la roue, un élément pivotant selon un axe sensiblement vertical articulé entre le porte-roue et les éléments de suspension.

La demande de brevet européen déposée sous le numéro EP 02/013797.2 concerne également de tels dispositifs et propose de mettre en oeuvre une glissière courbe pour guider le mouvement de carrossage du porte-roue par rapport aux éléments de suspension.

L'une des difficultés que l'on rencontre dans la conception de ces systèmes vient du fait que des efforts importants doivent être transmis de la chaussée à la caisse (et vice-versa) à travers la liaison au sol et en particulier le pneumatique, le porte-roue et la suspension. Ces efforts engendrent des contraintes mécaniques importantes avec toutes les conséquences qui s'en suivent sur la précision du guidage de la roue et sur la fiabilité des systèmes. Vu depuis la caisse du véhicule, les efforts transmis par la chaussée sont généralement détaillés de la manière suivante: un effort transversal (horizontal et orthogonal au plan de roue), un effort longitudinal (horizontal et parallèle au plan de roue), un effort vertical, un couple dit "d'enroulement" (autour de l'axe de la roue), un couple dit "de renversement" (autour de l'axe longitudinal) et un couple dit "d'auto-alignement" (autour de l'axe vertical). En plus de ces efforts transmis par la chaussée, la roue transmet à la caisse des efforts issus des forces d'inertie qu'elle subit en particulier la force centrifuge qui agit dans les courbes.

Dans les dispositifs de support et de suspension décrits dans les demandes de brevets citées plus haut, on a ajouté ,par rapport à des dispositifs de suspension conventionnels, un degré de liberté afin de permettre le carrossage de la roue par rapport à la caisse. Cette mobilité supplémentaire peut être réalisée de plusieurs manières différentes mais il est constant que le fait d'augmenter le nombre de pièces et le nombre d'articulations ou de pivots à tendance à dégrader la rigidité et/ou la robustesse du système complet. De plus, il est difficile de compenser ce déficit de rigidité en augmentant les sections des différents éléments car le volume disponible est généralement limité. En effet, de telles suspensions à carrossage variable doivent de préférence ne pas remettre en cause les compromis établis dans le domaine de l'encombrement (on emploie aussi le terme "packaging").

Un problème de ces systèmes est donc leur rigidité perfectible, en particulier vis à vis de l'effort longitudinal, du couplé d'auto-alignement et du couple d'enroulement.

Un autre problème qui peut se poser, en particulier dans les systèmes décrits dans le document EP 1247663, est celui de l'influence indésirable de certains types d'efforts sur le carrossage et surtout sur le braquage du plan de roue.

Un objectif de l'invention est de pallier au moins certains des inconvénients précités.

Cet objectif est atteint par un dispositif de support destiné à lier une roue à des éléments de suspension d'un véhicule, ledit dispositif de support comportant des moyens de carrossage conférant au porte-roue un degré de liberté de carrossage par rapport aux dits éléments de suspension, ledit dispositif comprenant une triple charnière fonctionnant selon au moins trois axes sensiblement longitudinaux liée d'une part au porte-roue et d'autre part aux dits éléments de suspension.

L'invention concerne également un dispositif de suspension et un véhicule comprenant le dispositif de support de l'invention.

L'invention sera mieux comprise grâce à la description des figures qui représentent respectivement:
Figure 1: vue en perspective d'un mode de réalisation d'un dispositif de support similaire à l'invention.
Figure 2: vue en perspective d'un mode de réalisation de la triple charnière du dispositif de l'invention.
Figure 3: vue schématique plane d'un véhicule selon l'invention.
Figure 4: vue en perspective d'un mode de réalisation du dispositif de suspension de l'invention.
Figure 5: vue en perspective d'une partie du mode de réalisation de la figure 4.
Figures 6 et 7: vues en perspective d'un autre mode de réalisation du dispositif de l'invention.
Figure 8: vue en perspective d'un autre mode de réalisation du dispositif de support de l'invention.
Figures 9 et 10: vues en perspective d'un autre mode de réalisation du dispositif de l'invention.
Figure 11: vue en perspective d'un autre mode de réalisation d'un dispositif de support similaire à l'invention.
Figure 12: vue en perspective d'un autre mode de réalisation d'un dispositif de support similaire à l'invention.

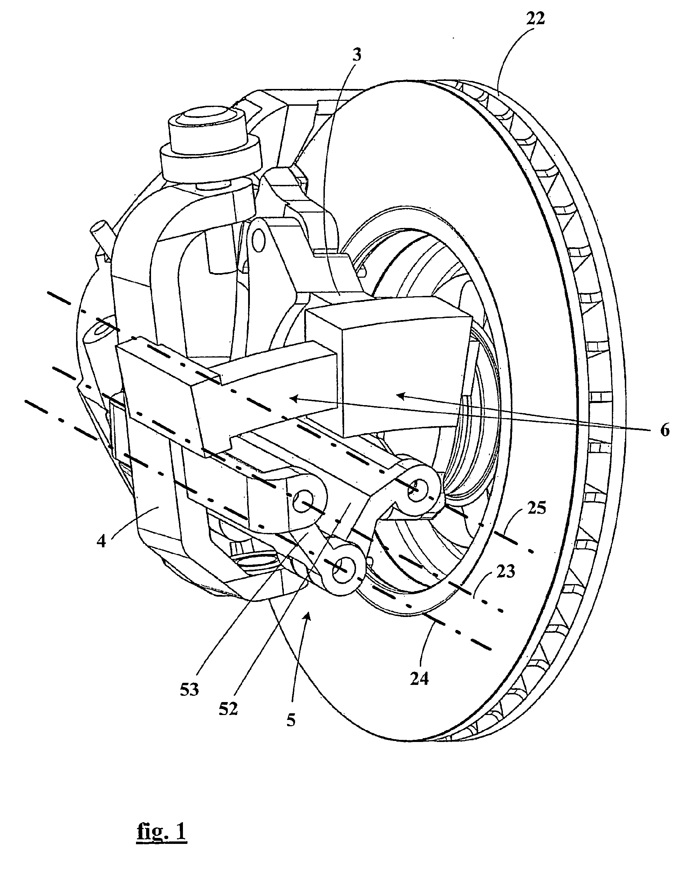

Sur les différentes figures, les éléments identiques ou similaires portent les mêmes numéros de références. Leur description n'est donc pas reprise systématiquement. Les réalisations du dispositif de support indiquées dans les figures 1, 11, 12 ne font pas partie de l'invention comme revendiquée.

La figure 1 représente (partiellement) un dispositif de suspension selon une réalisation proche de l'invention. Afin de mieux illustrer l'invention, la roue n'est pas représentée ici. Le disque de frein 22 permet de visualiser la position des différentes pièces. Le support intermédiaire 4 est destiné à être relié aux autres éléments de suspension de manière connue en soi et non représentée ici. Selon cette réalisation, le porte-roue 3 est lié au support intermédiaire 4 par l'intermédiaire de moyens assurant deux fonctions sensiblement indépendantes. La première de ces fonctions est une liaison (plane) matérialisée par une "triple charnière" 5. La triple charnière 5 est articulée selon trois axes: un axe intérieur 23 reliant une joue intérieure 53 au support intermédiaire 4, un axe extérieur 25 reliant une joue extérieure 52 au porte-roue 3 et un axe central 24 reliant les joues intérieure 53 et extérieure 52 entre elles. Ces axes sont sensiblement longitudinaux c'est à dire horizontaux et parallèles au plan de roue. Cette liaison autorise des mouvements du porte-roue 3 par rapport au support intermédiaire 4 dans le plan de carrossage tout en bloquant efficacement toute rotation relative autour de l'axe vertical et de l'axe longitudinal. La seconde fonction est celle du contrôle des mouvements du porte-roue par rapport aux éléments de suspension dans le plan de carrossage. Cette seconde fonction est assurée sur cet exemple par une glissière courbe 6 disposée également entre le porte-roue 3 et le support intermédiaire 4. Du fait que l'effort longitudinal et les couples d'auto-alignement et d'enroulement sont repris en grande part par la triple charnière 5, les contraintes qui transitent par la glissière 6 sont réduites par rapport aux systèmes décrits par exemple dans la demande EP 02/013797.2. Ceci permet à la fois une conception plus simple et plus légère de cette glissière et une meilleure rigidité du système complet en particulier vis à vis des couples d'auto-alignement et d'enroulement. Le mouvement de carrossage de la roue par rapport au support intermédiaire 4 a lieu autour d'un axe dont la position est définie par la géométrie du rail de la glissière 6. Différentes configurations de glissières peuvent être utilisées comme décrit dans la demande EP 02/013797.2. Bien sûr, l'axe de rotation défini par la glissière doit être compatible avec l'orientation des axes de la triple charnière 5. Par exemple, cette compatibilité est assurée lorsque les axes de la triple charnière ainsi que celui défini par la glissière sont tous parallèles entre eux.

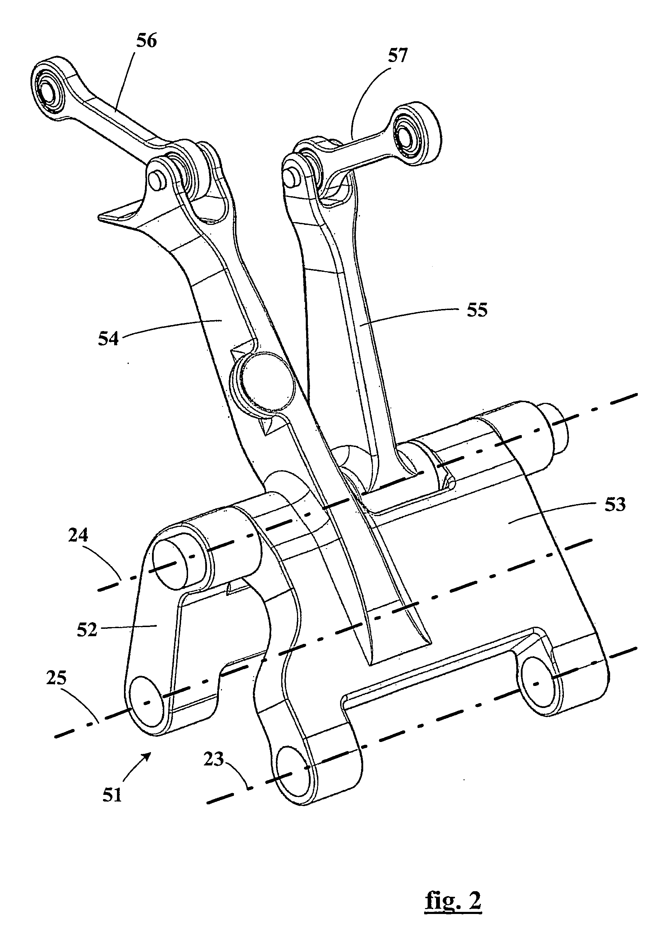

La figure 2 représente une partie d'un mode préféré de réalisation de l'invention. Il s'agit d'une triple charnière 51 assurant la première fonction de liaison décrite pour la triple charnière (5) de la figure 1 et assurant en outre la seconde fonction, c'est à dire le guidage du carrossage, alors que celle-ci est assurée séparément par une glissière (6) sur la figure 1. La triple charnière 51 est ici disposée avec son axe central 24 en haut alors qu'il est en bas sur le dispositif de la figure 1. La fonction de guidage dans le plan de carrossage est réalisée par l'intermédiaire de leviers 54 et 55 solidaires respectivement des joues 53 et 52 de la triple charnière 51. Des biellettes 56 et 57 sont destinées à relier les extrémités supérieures des leviers 54 et 55 d'une part au porte-roue et d'autre part au support intermédiaire (non représentés ici). Ainsi, la partie supérieure du dispositif représenté ici remplace la glissière (6) dans le système de la figure 1 pour ce qui est de la fonction de guidage du mouvement de carrossage. La triple charnière 51 et ses leviers 54 et 55 se comportent à la manière d'une paire de ciseaux intercalée entre le porte-roue et les éléments de suspension.

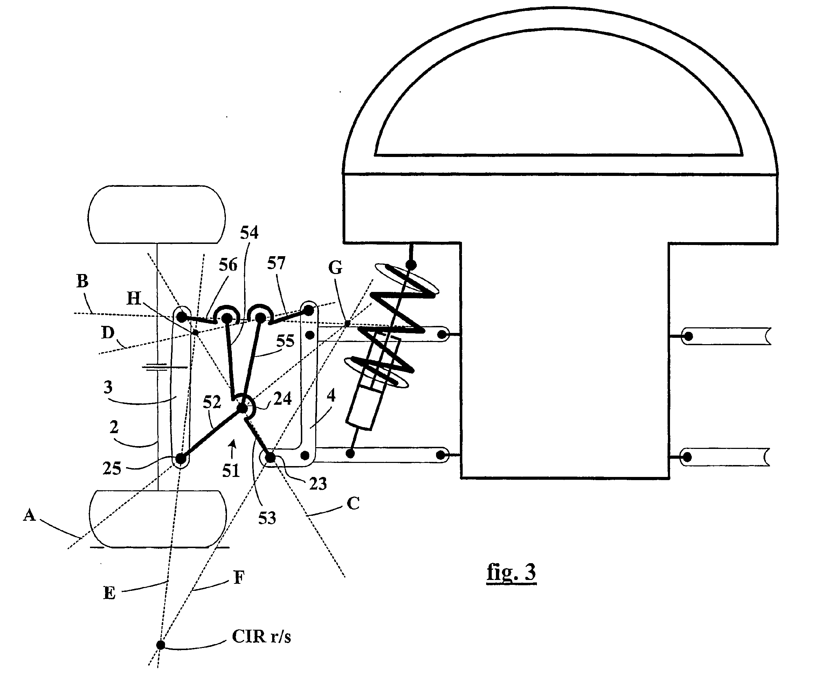

La figure 3 montre schématiquement le principe cinématique du système de la figure 2 appliqué à un véhicule équipé par exemple d'une suspension à double triangle. La triple charnière 51 prolongée des leviers 54 et 55 relie comme décrit plus haut le porte-roue 3 au support intermédiaire 4 par l'intermédiaire des biellettes 56 et 57. On visualise bien sur cette figure que l'ensemble constitué par la triple charnière 51 et les leviers 54 et 55 en fonctionnant à la manière d'une paire de ciseaux, détermine la cinématique du porte-roue 3 et de la roue 2 par rapport au support intermédiaire 4. Le support intermédiaire 4 est lié aux autres éléments de suspension (bras, triangles, ressorts) de manière connue en soi afin de permettre des mouvement de suspension sensiblement verticaux.

On peut déterminer la position, dans le plan de carrossage, du centre instantané de rotation (CIR r/s) de la roue 2 (et du porte-roue 3) par rapport au support intermédiaire 4 de la manière suivante: on détermine d'une part l'intersection (G) de la droite A correspondant à l'orientation de la joue extérieure 52 de la triple charnière 51 avec la droite B correspondant à l'orientation de la biellette extérieure 56; on détermine d'autre part l'intersection (H) de la droite C correspondant à l'orientation de la joue intérieure 53 de la triple charnière 51 avec la droite D correspondant à l'orientation de la biellette intérieure 57; on construit ensuite la droite E qui joint l'intersection des droites C et D (c'est à dire le point H) et le pivot (l'axe extérieur 25) de la joue extérieure 52 sur le porte-roue 3 et la droite F qui joint l'intersection des droites A et B (c'est à dire le point G) et le pivot (l'axe intérieur 23) de la joue intérieure 53 sur le support intermédiaire 4; le centre instantané de rotation (CIR r/s) du mouvement de carrossage de la roue 2 par rapport au support intermédiaire 4 se trouve alors à l'intersection des droites E et F. On comprend que la position du centre instantané de rotation est la conséquence de la combinaison des caractéristiques géométriques des nombreuses pièces du dispositif. Sur cet exemple particulier et dans la position verticale de la roue représentée, le centre instantané de rotation se trouve sous le sol c'est à dire que le fonctionnement passif contrôlé par les efforts transversaux est possible. De plus, dans la position moyenne de la roue, le centre instantané de rotation est situé sensiblement dans le plan de roue ce qui constitue un mode de réalisation préféré de l'invention. Le lecteur est invité à consulter la demande WO 01/72572 pour des précisions sur les effets de la position du centre instantané de rotation.

La position moyenne de la roue correspond au cas où le dispositif de suspension porte la charge nominale prévue pour le véhicule et où la roue présente un angle de carrossage correspondant au roulage en ligne droite. En général, cet angle de carrossage est très faible, de sorte que l'on peut l'assimiler à un carrossage nul (donc au cas d'une roue parfaitement verticale).

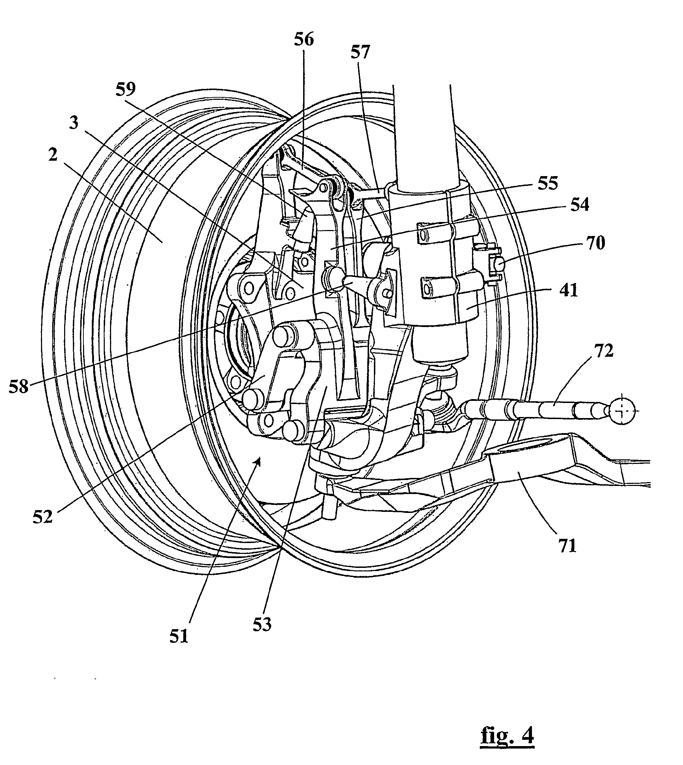

La figure 4 représente un mode de réalisation du système de suspension de l'invention incorporant le dispositif décrit en particulier à la figure 2. Il est basé dans cet exemple sur une suspension MacPherson connue en soi. La jambe de force 41 est guidée vis à vis de la caisse par son attache supérieure (non représentée), par un triangle inférieur 71 et par une biellette de direction 72. La partie inférieure de la jambe de force 41 joue ici le rôle du support intermédiaire (4) des figures précédentes. Selon l'invention, l'effort longitudinal et les couples d'auto-alignement et d'enroulement sont repris par la triple charnière 51. Les contraintes qui transitent par les leviers 54 et 55 sont réduites car elle concernent uniquement le couple de carrossage et une partie (réduite) des efforts transversaux. Si l'on compare l'architecture décrite ici à celle de la figure 2 de la demande internationale WO 01/72572, on comprend aisément l'apport de l'invention sur le plan de la rigidité. De plus, comme on le verra plus loin, ce système permet en outre une grande liberté de conception et de réglage de la définition cinématique du mouvement dans le plan de carrossage.

Des butées de carrossage (58, 59) peuvent être mises en oeuvre afin de limiter la course des mouvements de carrossage. Sur cet exemple préféré, une butée de contre-carrossage 58 est disposée entre le levier intérieur 54 et la jambe de force 41 et une butée de carrossage 59 est disposée entre le levier intérieur 54 et le porte-roue 3. Les butées peuvent, outre leur rôle consistant à limiter les mouvements, également influencer utilement le comportement passif du système. En effet, leurs formes et leurs dimensions peuvent introduire des raideurs et un amortissement variables en fonction du débattement de carrossage. Ces butées sont de préférence réalisées en un matériau élastomère tel que du caoutchouc.

Les biellettes 56 et 57 peuvent comporter des moyens permettant de faire varier leurs longueurs afin par exemple de pouvoir modifier la définition cinématique décrite à la figure 3.

Un amortisseur de carrossage 70 (dont on aperçoit l'extrémité de la tige) peut par exemple être disposé entre la jambe de force 41 et le porte-roue 3 et constituer un moyen supplémentaire d'influencer le comportement passif du dispositif de support de l'invention. Alternativement, un élément actif comme un vérin (par exemple hydraulique, pneumatique ou électrique) peut permettre un contrôle actif du carrossage.

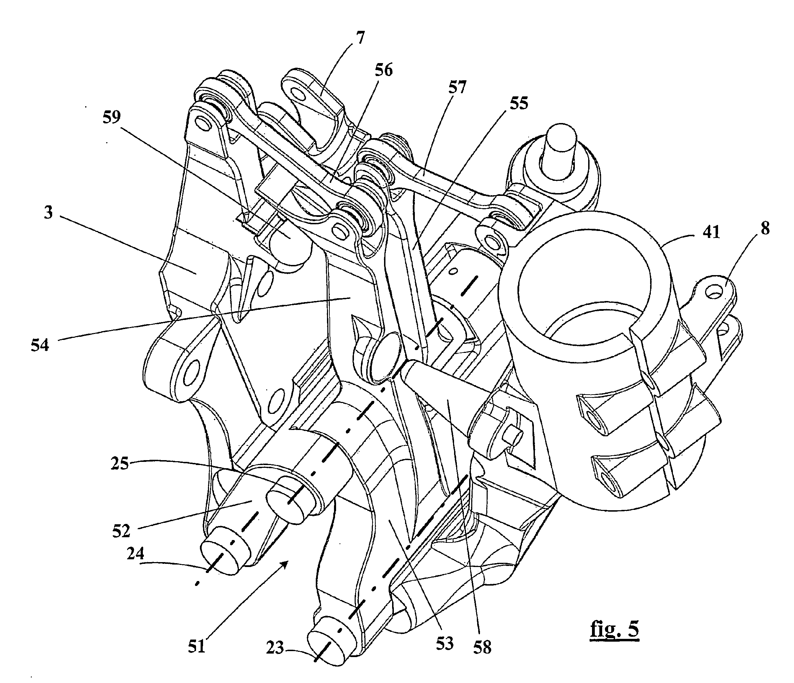

La figure 5 est une vue selon un angle différent du système de la figure 4. Sur cette vue, la roue, le triangle inférieur, la partie supérieure de la jambe de force, la biellette de direction et l'amortisseur de carrossage ont étés omis afin de faciliter la lecture. On peut ainsi mieux visualiser en particulier les axes 23, 24 et 25 de la triple charnière 51, les butées progressives 58 et 59 et les chapes 7 (sur le porte-roue) et 8 (sur la jambe de force) destinées à recevoir un amortisseur ou un actionneur de carrossage.

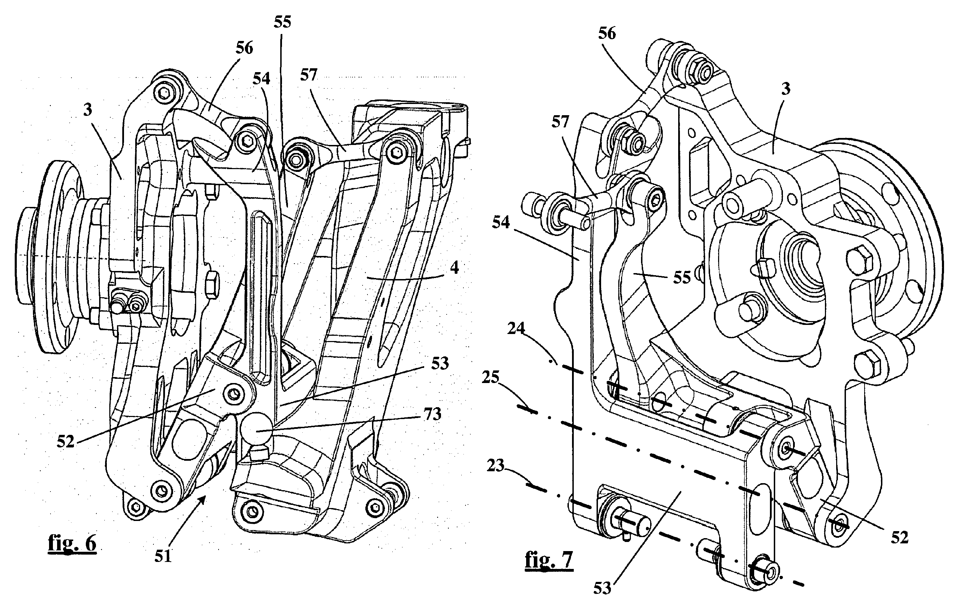

Les figures 6 et 7 sont deux vues d'un autre mode de réalisation du dispositif de support selon l'invention adapté plus particulièrement à la suspension d'un essieu moteur, de préférence pour l'essieu arrière d'un véhicule. La principale différence entre ce mode de réalisation et celui des figures 2, 4 et 5 est que le passage d'une transmission (elle-même non représentée ici) est rendu possible par une disposition particulière. Un évidement est prévu dans le support intermédiaire 4 (voir figure 6, non représenté sur la fig 7) ainsi que dans le porte-roue 3 (voir figure 7). Les leviers 54 et 55 sont également excentrés dans le même but (voir figure 7). Sur cet exemple, le support intermédiaire 4 est destiné à être lié à la caisse du véhicule par une paire de triangles et une biellette de pince (connectée par l'intermédiaire de la rotule 73).

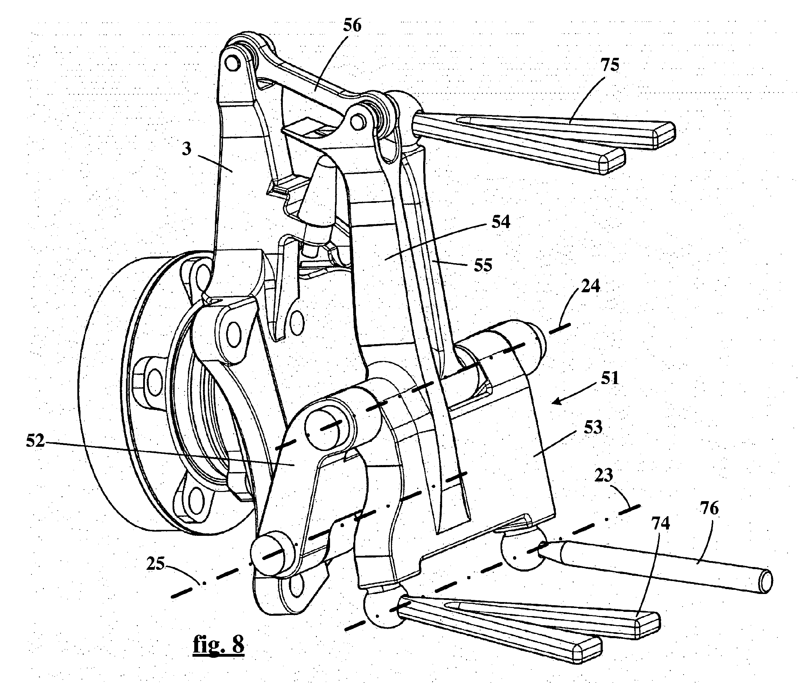

La figure 8 représente un autre mode de réalisation du dispositif de support selon l'invention. La principale particularité de celui-ci est qu'il est relié directement aux bras et/ou triangles de suspension sans support intermédiaire ni biellette intérieure (voir références 4 et 57 sur la figure 6). Un avantage est donc un nombre réduit d'éléments et de liaisons. Cette simplification est rendue possible car on peut utiliser la mobilité verticale relative des bras ou triangles inférieur 74 et supérieur 75 pour compenser la variation de distance entre le point d'attache inférieur à la joue intérieure 53 et supérieur au levier 55 issu de la joue extérieure 52 du dispositif de support de l'invention. La définition de la position du centre instantané de rotation du mouvement de carrossage peut se faire de la manière décrite à la figure 3 à condition de considérer que le triangle supérieur 75 remplace la biellette intérieure (référence 57 sur la figure 3). De préférence, le ressort de suspension (non représenté) prend appui sur le triangle inférieur 74.

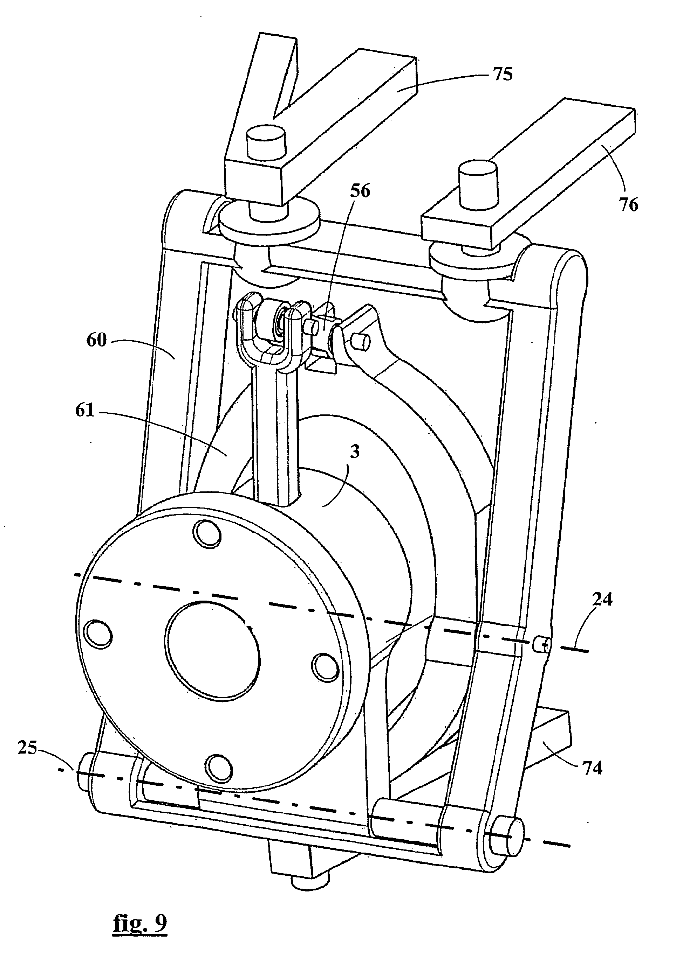

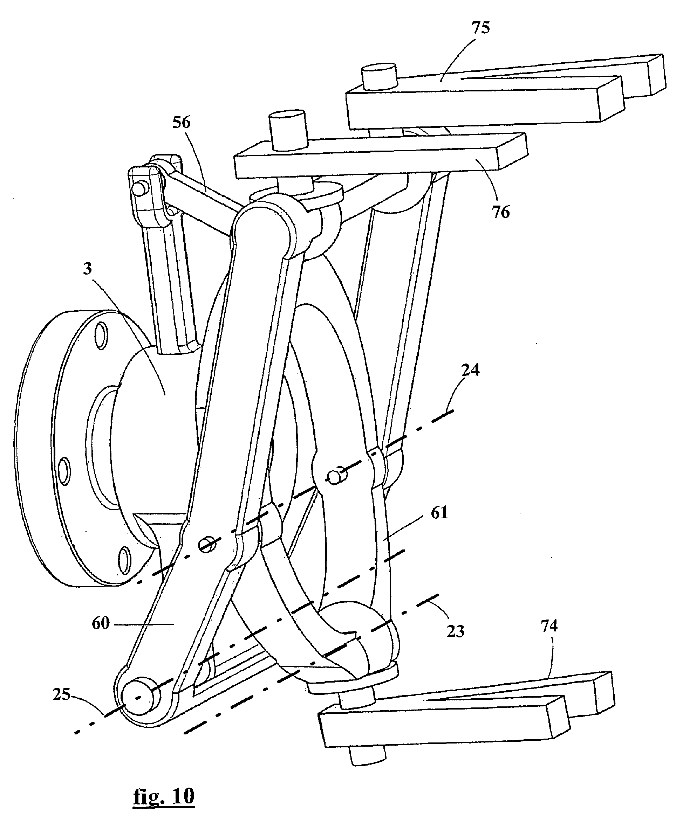

Les figures 9 et 10 représentent un mode de réalisation similaire à celui de la figure 8. Le principe cinématique est le même, celui d'une paire de ciseaux (60, 61) qui guide le mouvement de carrossage du porte-roue 3 par rapport aux éléments de suspension (74, 75 et 76). La définition de la position du centre instantané de rotation du mouvement de carrossage peut se faire de la manière décrite à la figure 3 lorsque l'on considère que les éléments supérieurs (triangle 75 et bielle 76) remplacent la biellette intérieure (référence 57 sur la figure 3).

Cependant, dans ce mode de réalisation, les efforts d'enroulement ou d'auto-alignement ne sont pas repris exclusivement par la partie basse des ciseaux (c'est à dire par la triple charnière) car dans ce mode de réalisation la triple charnière comporte une liaison ponctuelle en lieu et place de l'un de ses axes latéraux (l'axe intérieur 23 de la figure 7). Une part importante des efforts est donc transmise par le cadre extérieur 60 (qui constitue l'une des branches des ciseaux) directement de la partie basse du porte-roue 3 aux bras et/ou triangles supérieurs (75, 76). Le cadre intérieur 61 (qui constitue l'autre branche des ciseaux) relie le bras ou triangle inférieur (ici un triangle inférieur 74) à la partie haute du porte-roue 3 par l'intermédiaire d'une biellette 56 comme précédemment. Le bras 76 peut être une biellette de direction pour le cas d'un essieu directeur ou une biellette de pince dans le cas d'un essieu multi-bras non directeur. Sur un essieu non directeur, un trapèze peut également remplacer l'ensemble triangle (75) et bielle (76). Le passage d'un arbre de transmission est possible au centre du dispositif.

Un avantage de ce mode de réalisation est que les efforts de braquage (issus du couple d'auto-alignement) transitent par un seul axe (l'axe extérieur 25) au lieu de deux axes dans l'exemple de la figure 8 ou trois axes dans les exemples des figures 1 à 7.

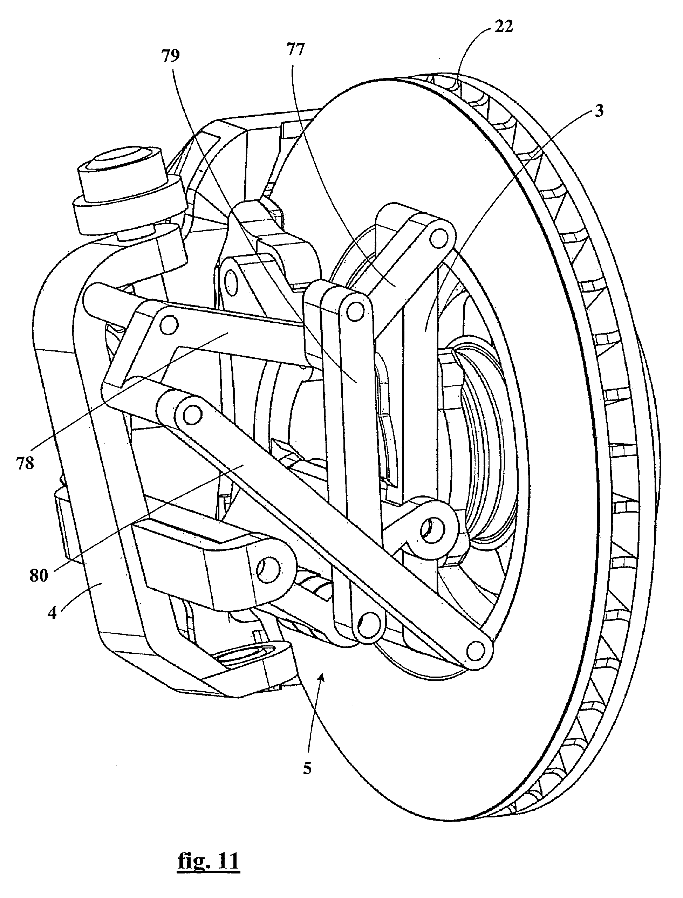

La figure 11 représente un autre mode de réalisation que l'on peut comparer aisément à celui de la figure 1. Dans ce mode de réalisation, la fonction de guidage du mouvement de carrossage est assurée non pas par une glissière courbe (comme sur la figure 1) mais par une seconde charnière (77, 78) dont les mouvements sont liés à ceux de la triple charnière 5 par une bielle 79. On comprend bien que les dimensions et positions des différents éléments conditionnent la cinématique de carrossage et en particulier la position (variable) du centre instantané de rotation. Une bielle de charge 80 assure la reprise des efforts en particulier verticaux du porte-roue 3 vers le support intermédiaire 4.

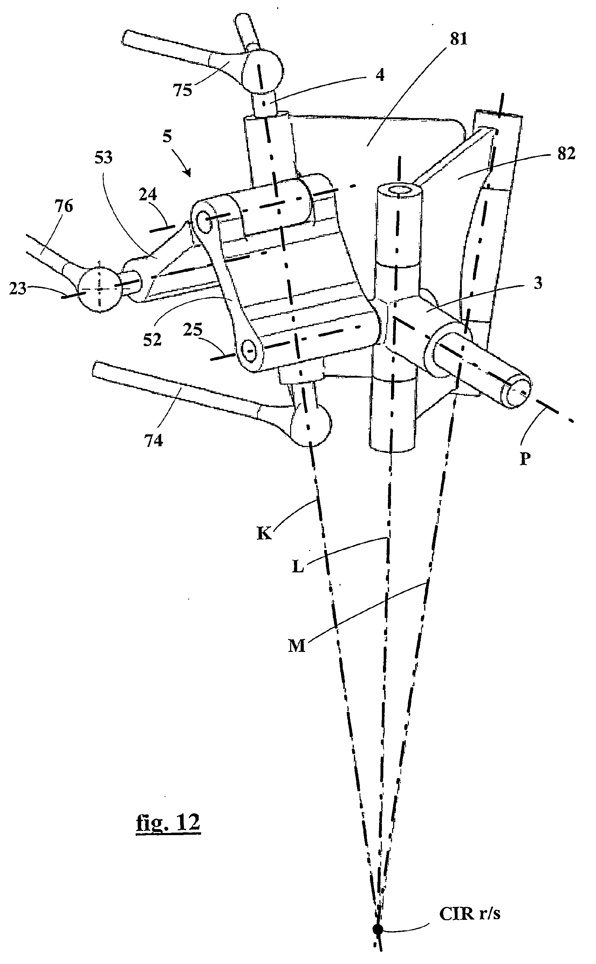

La figure 12 représente un autre mode de réalisation d'un dispositif de support. Sur cet exemple, une triple charnière 5 tel que décrite à la figure 1 (mais inversée) est combinée avec d'autres moyens particuliers de guidage du mouvement de carrossage. En effet, le mouvement de carrossage est guidé par une seconde triple charnière sensiblement verticale. Les trois axes (K,L et M) de cette seconde charnière coopèrent pour définir le centre instantané de rotation (CIR r/s). Ce principe de guidage du carrossage par rotation d'éléments intermédiaires autour d'axes sensiblement verticaux est dérivé du principe décrit dans la demande EP 1247663.

Le support intermédiaire 4 est lié au véhicule (non représenté) par des triangles inférieur 74 et supérieur 75 et une bielle de pince ou de direction 76 de manière connue en soi. Une première joue verticale 81 est articulée par rapport au support intermédiaire 4 selon un axe K sensiblement vertical. Une deuxième joue verticale 82 est articulée par rapport à la première selon un axe M également sensiblement vertical. Le porte-roue 3 est articulé par rapport à la deuxième joue 82 selon un axe L également sensiblement vertical. Le porte-roue 3 est destiné à porter une roue par son axe P. De préférence, les trois axes K, L et M se rej oignent pour définir le centre instantané de rotation (CIR r/s) du mouvement de carrossage. Un avantage de ce mode de réalisation est qu'il permet de définir un centre instantané de rotation dont la position ne varie pas au cours du mouvement de carrossage.

Le terme "triple charnière" employé dans la présente demande désigne un agencement mécanique comprenant au moins trois axes de rotation sensiblement parallèles et au moins deux joues afin de pouvoir relier deux pièces (le porte-roue et la suspension verticale) et autoriser un mouvement relatif sensiblement plan (c'est à dire une translation) entre ces deux pièces. Dans les modes de réalisation (voir figures 1, 11 et 12) où le guidage dans le plan de carrossage n'est pas assuré par la triple charnière, on peut utiliser une triple charnière comprenant plus de trois axes sans modifier notablement le fonctionnement du système. Cela peut avoir un intérêt du point de vue de l'encombrement. En revanche, lorsque le guidage est réalisée par le principe des ciseaux (donc par la triple charnière comme sur les figures 2 à 10), on comprend bien que l'ajout d'axes au delà du nombre minimum de trois aura une incidence sur la définition cinématique.

On comprend également que pour permettre la fonction de liaison de la triple charnière, ses axes doivent être sensiblement parallèles entre eux et longitudinaux. Selon les moyens utilisés pour guider le carrossage, ce parallélisme peut ne pas être indispensable ou peut être plus ou moins précis. Si les axes ne sont pas tout à fait parallèles, le mouvement de carrossage sera couplé avec des mouvements de braquage ou d'enroulement. Un tel couplage peut être intéressant.

## Revendications

1. Dispositif de support (3, 5) destiné à lier une roue (2) à des éléments de suspension (4, 41, 74, 75, 76) d'un véhicule, ledit dispositif de support comportant des moyens de carrossage conférant au porte-roue (3) un degré de liberté de carrossage par rapport aux dits éléments de suspension, ledit dispositif étant **caractérisé en ce qu'**il comprend une triple charnière comprenant au moins trois axes sensiblement longitudinaux liée d'une part au porte-roue (3) et d'autre part aux dits éléments de suspension et **en ce que**, la triple charnière fonctionnant selon trois axes et comprennant deux joues (52, 53), deux leviers (54, 55) sont chacun solidaire de l'une des deux joues, le mouvement de carrossage étant contrôlé par les mouvements desdits leviers.

2. Dispositif de support selon la revendication 1 dans lequel les trois axes sont parallèles.

3. Dispositif de support selon l'une des revendications précédentes, comprenant en outre des moyens de guidage du mouvement de carrossage (6, 54, 55, 56, 57, 77, 78, 79, 81, 82) configurés de manière à ce que le mouvement du porte-roue (3) par rapport aux éléments de suspension admette, autour d'une position moyenne, un centre instantané de rotation (CIR r/s) situé sous le sol.

4. Dispositif de support selon la revendication 3, les moyens de guidage du mouvement de carrossage (6, 54, 55, 56, 57, 77, 78, 79, 81, 82) étant en outre configurés de manière à ce que le centre instantané de rotation (CIR r/s) soit situé sensiblement dans le plan de roue dans la position moyenne de la roue.

5. Dispositif de suspension comprenant le dispositif de support selon l'une des revendications précédentes.

6. Dispositif de suspension selon la revendication 5 le dit dispositif de suspension comprenant en outre au moins un bras supérieur (75) et un bras inférieur (74) et dans lequel le bras inférieur est relié directement à la joue intérieure (53) de la triple charnière et le bras supérieur est relié directement au levier (55) solidaire de la joue extérieure (52) de la triple charnière.

## Claims

1. Support system (3, 5) designed to connect a wheel (2) to suspension elements (4, 41, 74, 75, 76) of a vehicle, the said support system comprising camber means that confer upon the wheel support (3) a degree of camber freedom relative to the said suspension elements, the said system being **characterised in that** it comprises a triple hinge with at least three essentially longitudinal axes connected on the one hand to the wheel support (3) and on the other hand to the said suspension elements and **in that**, the triple hinge (5) operating along three axes and comprising two flanges (52, 53), two levers (54, 55) are attached respectively to one of the two flanges, the camber movement being controlled by the movement of said levers.

2. Support system according to Claim 1, in which the three axes are parallel.

3. Support system according to any of the preceding claims, also comprising means (6, 65, 55, 56, 57, 77, 78, 79.81, 82) for guiding the camber movement, configured in such manner that the movement of the wheel support (3) relative to the suspension elements has an instantaneous centre of rotation (CIR r/s) about a mean position, located below ground level.

4. Support system according to Claim 3, the camber movement guiding means (6, 54, 55, 56, 57, 77, 78, 79, 81, 82) also being configured such that the instantaneous centre of rotation (CIR r/s) is located in the wheel plane when the wheel is in its central position.

5. Suspension system comprising the support system according to any of the preceding claims.

6. Suspension system according to Claim 5, said suspension system also comprising at least one upper arm (75) and one lower arm (74) and in which the lower arm is connected directly to the inner flange (53) of the triple hinge and the upper arm is connected directly to the lever (55) attached to the outer flange (52) of the triple hinge.

## Patentansprüche

1. Tragvorrichtung (3, 5), die dazu bestimmt ist, ein Rad (2) mit Aufhängungselementen (4, 41, 74, 75, 76) eines Fahrzeugs zu verbinden, wobei die Tragvorrichtung Radsturzeinrichtungen aufweist, die dem Radhalter (3) einen Radsturz-Freiheitsgrad bezüglich der Aufhängungselemente verleiht, wobei die Vorrichtung **dadurch gekennzeichnet ist, dass** sie ein Dreifachscharnier mit mindestens drei im Wesentlichen längs verlaufenden Achsen enthält, das einerseits mit dem Radhalter (3) und andererseits mit den Aufhängungselementen verbunden ist, und dass, da das Dreifachscharnier gemäß drei Achsen arbeitet und zwei Wangen (52, 53) enthält, zwei Hebel (54, 55) je fest mit einer der Wangen verbunden sind, wobei die Radsturzbewegung durch die Bewegung der Hebel gesteuert wird.

2. Tragvorrichtung nach Anspruch 1, bei der die drei Achsen parallel sind.

3. Tragvorrichtung nach einem der vorhergehenden Ansprüche, die außerdem Führungseinrichtungen der Radsturzbewegung (6, 54, 55, 56, 57, 77, 78, 79, 81, 82) enthält, die so konfiguriert sind, dass die Bewegung des Radhalters (3) bezüglich der Aufhängungselemente um eine Mittelstellung herum einen Momentandrehpunkt (CIR r/s) zulässt, der sich unter dem Boden befindet.

4. Tragvorrichtung nach Anspruch 3, wobei die Führungseinrichtungen der Radsturzbewegung (6, 54, 55, 56, 57, 77, 78, 79, 81, 82) außerdem so konfiguriert sind, dass der Momentandrehpunkt (CIR r/s) sich in der mittleren Stellung des Rads im Wesentlichen in der Radebene befindet.

5. Aufhängungsvorrichtung, die die Tragvorrichtung nach einem der vorhergehenden Ansprüche enthält.

6. Aufhängungsvorrichtung nach Anspruch 5, wobei die Aufhängungsvorrichtung außerdem mindestens einen oberen Arm (75) und einen unteren Arm (74) enthält, und wobei der untere Arm direkt mit der inneren Wange (53) des Dreifachscharniers und der obere Arm direkt mit dem Hebel (55) verbunden ist, der fest mit der äußeren Wange (52) des Dreifachscharniers verbunden ist.
